# EUROPEAN PATENT SPECIFICATION

(11) **EP 0 572 729 B1**
(45) Date of publication and mention of the grant of the patent: **14.05.1997**
(21) Application number: 92203369.1
(22) Date of filing: 03.11.1992
(51) Int. Cl.: H02P 1/28, H02P 3/18

(54) **Apparatus and three phase induction motor starting and stopping control method**
Vorrichtung und Regelmethode zum Starten und Stoppen eines Dreiphasen-Induktionsmotors
Appareil et méthode de régulation pour démarrer et arrêter un moteur à induction triphasé

(30) Priority: 04.05.1992 ES 9200923
(43) Date of publication of application: 08.12.1993
(73) Proprietor: AGUT, S.A., E-08225 Terrassa (Barcelona) (ES)
(72) Inventor: Agut Sanz, Juan, Terrassa (Barcelona) (ES)
(74) Representative: Ungria Lopez, Javier

(56) References cited:
- EP-A- 0 394 955
- EP-A- 0 446 936
- EP-A- 0 512 372
- WO-A-84/04005
- DE-A- 3 529 164
- JOURNAL DE L'EQUIPEMENT ELECTRIQUE ET ELECTRONIQUE, no. 480, June 1982, Paris FR, page 58; B. TOOHEY : 'Le démarrage progressif des moteurs par thyristors'

## Description

As is expressed in the title of this specification, the present invention consists of an apparatus and three phase induction motor starting and stopping control method.

Directing starting by connecting the motor to the supply line without inserting any other element is the simplest and cheapest of the available methods to attain starting of an electromotor, but it has two serious inconveniences: due to the transitory phenomena in the establishment of the flow in the gap, the motor torque endures pulses of outstanding amplitude that can cause damages in the mechanical transmission organs of movement and on the other hand, the current during the starting phase reaches very high values that cause important voltage drops and disturbances in the power supply lines.

For the above reasons, it is convenient and adequate that electric motors of the type in question, be started up with the collaboration of diverse complementary and auxiliary elements whose purpose is to reduce the detrimental electric and mechanical effects that cause direct starting.

The purpose of the present invention consists of establishing a method and apparatus for starting three phase induction motors, by means of controlled conduction of semiconductor power elements, in such a way that the current value during the starting period can be reduced and there is control of the motor torque during the speeding up period as well as during the stopping phase of the same.

The starting of three phase induction motors can be done by diverse electromechanical methods that are well known and industrially applied. Among these methods are direct starting, autotransformer starting, starting with insertion of reactors or resistors between the supply or feed line and the motor and starting with change of connection of windings of the initially star connection motor converted into a delta connection motor, among others.

As we have already said, the starting of motors according to the direct method involves some inconveniences which in many cases make the corresponding system unfeasible. The remaining conventional methods try to reduce the above cited inconveniences of the direct system, but cannot eliminate them totally, given that the voltage application of the stator windings is done step by step, with new transitory phenomena appearing when the voltage switchings take place.

Since the appearance of power semiconductors, methods have been developed to apply voltage to the motor progressively and continuously, cutting the feed sine waves. In this way it is possible to adjust the root-mean-square value of the voltage applied to the motor and consequently control the root-mean-square value of the current during the starting phase.

Up to now, none of the techniques used nor any of the embodiments known, have given a totally satisfactory result. All of the solutions used tend to reduce the negative effects, but none of them totally overcome the inconveniences that have arisen in each method.

PCT W084/04005 which describes a method and three phase alternating current induction motor starting control apparatus is known. In it, the conduction angle attained during the sequential firing has to suffice to avoid simultaneous non-conduction of the switching means. This determines a sharper starting since the initial voltage is higher than 40 % of the main voltage; and besides oscillations of flux and of the motor torque are produced and the variation of the conduction angle is independent of the speed of the motor.

It should be taken into account that the origins of angle measurement in PCT W084/04005 are different from that of the present invention, hence the angle of 170-180º that is mentioned in the present invention, corresponds to 80-90º taking the same origin as the PCT, in which this value remains reduced to 45-55º (claim 5.) The value 140 to 150 of the present invention corresponds to 50-60º taking the same origin of the PCT W084/04005.

Besides in the PCT WO84/04005 it is not possible to effect and gentle and progressive stop, which is necessary in most uses.

EP-A-0 446 936 discloses an apparatus for controlling the starting and stopping of a three phase induction motor, comprising static switches, each static switch coupling one of the feed line phase to a different stator winding respectively, the static switches being of the controlled type that lead the current from the moment of application of a striking pulse until the current that flows through the same is cut off and with the particularity that at least in one of the feed line phases a passing by zero detector of the feed voltage waves has been connected to it; also comprising some galvanically insulated voltage transducers with analogic input and digitalised output with two states, high and low, each one of the cited voltage transducers being connected between the input and output terminals of the static switches placed in each one of the feed line phases of the motor, an electromotive force detector sensing the simple phase voltage across the stator windings at which it is connected during the periods in which the corresponding phase does not conduct; allowing rapid variation of the conduction angle profile of the static switches in terms of the motor speed until full conduction of 180 electric degrees per semiperiod is attained when the motor has been accelerated up to a speed close to the nominal one and during the stopping phase of the motor, the conduction angle of the static switches drops according to a function of the non-linear, monotonous and decreasing time; effecting a gentle and progressive stopping of the motor.

DE-A-3 529 164 discloses an apparatus for controlling the starting and stopping of a three phase induction motor comprising in one of the feed line phases an intensity transducer connected to a signal lever converter for directly controlling and limiting the actual current that circulates through the motor.

JOURNAL DE L'EQUIPEMENT ELECTRIQUE ET ELECTRONIQUE no. 480, June 1982, PARIS FR, page 58, TOOHEY BOB, "Le démarrage progressif des moteurs par thyristors", discloses a soft starting apparatus for a polyphase induction motor comprising a closed loop control making use of speed and current data.

The present invention refers to an apparatus for controlled starting and stopping of a three-phase induction motor according to claim 1 and the corresponding method according to claim 8.

The method is established to control the starting of three phase induction motors by means of controlling the conduction time of the semiconductor power devices connected in series between each one of the three feed phases and the corresponding motor windings. The semiconductor devices are of the type that become the conduction state upon applying a control signal (firing signal) and they remain in said until the current that flows through the same dies away, in short, they are semiconductor devices generally known as thyristors or triacs that constitute silicon controlled rectifiers.

The developed method basically consists of the following points.
- Effect a simultaneous firing of the semiconductors corresponding to two phases of the feed line applying cyclically this double firing order to the six semiconductors connected to the three feed phases, in accordance with the voltage sequence of the feed line or sequence of the currents that flow through the motor phases. This double two phase firing permits discontinuous current operation, in other words, that there may be instants in which no current flows through any of the motor phases or the feed line. With this type of operation the root-mean-square value of the voltage initially applied to the motor is reduced below a theoretical limit of 40 % of the voltage of the feed line, which is the minimum attainable value when only operation of the starter is permitted in continuous conduction mode, in other words, that there should always be current at least in two feed phases.

One additional advantage of the method developed here of simultaneous firing of the semiconductors corresponding to two phases, is that in the event of a momentaneous switching failure of these devices, the current is re-establish upon giving the order of conduction to the two semiconductors that follow them in accordance with the cyclic firing order.
- Upon giving the running order to the motor, the first pair of semiconductors is fired with a retard close to the theoretical acceptable maximum with regard to the previus one by zero crossing of the voltage placed between the phases corresponding to these semiconductors. Said retard is between 170 and 180 electric degrees as of said zero crossing of the voltage placed between the same phases.
- After the firing of the first pair of semiconductors, which in the event of direct phase sequence are the ones corresponding to the phases R and S, the ones corresponding to phases R and T are fired and then the ones corresponding to phases T and S. During the first cycles of line starting from the first firing order, the delay angle of the firing order referred to the zero crossing of the voltage composed of the phases that are fired, there is a quick reduction from the initial value of 170 to 180 electric degrees to an adjustable value in the apparatus and that is between 140 and 150º, depending on the initial starting torque required. This work phase lasts from 2 to 10 cycles of the frequency of the feed line and has the purpose of progressively applying the starting voltage with which the flux on the air gap is established gradually and transitory oscillations of the inductor flux, which in turn would cause pulses in the motor torque.
- After this initial phase has gone by, and the pre-set pedestal voltage is reached, the conduction value of the semiconductor devices is increased, whereby the root-mean-square value of the voltage applied to the motor windings increases continuously without steps. A conduction angle is understood as the one corresponding to the time during which the power semiconductors permit the flow of current through themselves and the motor windings.

During this phase or the previous one, the rate of flow passes discontinuously as described to the continuous mode (when current always flow through at least two phases.) The theoretical analysis shows that this transition is produced when the conduction angle is equal or larger than 120 electric degrees in each semi-period of the feed line. This condition is detected by the control system and as of this moment the synchronization system referred to the zero crossing of the voltage waves changes to the synchronizaton method of zero crossing of the current of each phase, which is taken as the time origin to determine the instant in which the firing order must be produced by the two phases that have to enter into conduction, in accordance with the established cyclic sequence. The conduction angle value in each instant is determined by a generator of angle function in terms of time (control in open loop) or else it can be determined by a closed control loop that compares the speed profile imposed on the system with the speed value in each instant, obtaining said value by means of a suitable electromechanical transducer, for example a tachometric generator or a pulse generator. Both operating modes can be selected by means of a suitable device contained in the starter apparatus itself.
- During the phase of progressive increase of voltage described above, the system object of this invention monitors the electromotive force of the motor in terms of the instantaneous line-to-neutral voltage value of a phase when it does not transmit and said value is compared with a pre-established level that corresponds to a speed close to the nominal one. When the electromotive force exceeds this level, the system considers that the speed of the motor is very close to the nominal one and the conduction angle of the semiconductors icnreases quickly in order to apply to the motor the nominal voltage and reach the steady state conditions in the least possible time.
- Having reached the steady state the full voltage of the line can be applied to the motor or else said voltage can be reduced in terms of the load state. The apparatus makes it possible to select one of these two options.

In the event that the option of voltage in terms of the load is chosen, the system acts in such a way that phase angle between the voltages and currents (optimization of the power factor) is reduced imposing a maximum value upon the power factor attainable with this method in order to avoid excessive reduction of the voltage applied to the motor, and consequently of the torque developed by the same.
- Upon giving the stopping order the method and apparatus object of this invention, make it possible to choose between two systems. The first one consists of switching off the motor, eliminating all the firing orders to the power semiconductors. The second one consists of progressively reducing the voltage applied to the motor reducing the conduction angle of the power semiconductos, whereby in turn the motor torque is progressively reduced taking a value below the resistant torque of the load and consequently producing a controlled deceleration of the system. In the method object of this invention, the conduction angle is a monotonous decreasing non-linear function of the time that is implemented by means of an algorithm in the generator of the conduction angle profile.

The control method destined to attain the starting and stopping of three phase induction motors is of the type that carries out controlled firing of some static switches connected in series with each one of the phases of the feed line, the static switches being of the controlled type that lead the current from the moment of applying a firing pulse until the current that flows through the same is cancelled. Particularly, the apparatus comprises some galvanically insulated voltage transducers with analogic input and digitalized output, with two states, high and low, each one of the cited voltage transducers being connected between the input and output terminals of the static switches, arranged in each one of the phases of the motor feed line.

At least in one of the phases of the feed line, a zero crossing detector of the feed voltage waves has been connected. Likewise, to each one of the phases of the feed line a sequential and cyclic firing control device of the static switches has been connected in terms of the signals coming from the zero crossing detector and voltage transducers.

At least in one of the phases of the feed line a current transducer has been connected, each one of which is in turn connected to a signal level converter.

At the output of the electromotive force detector and at the output of the signal level convertor a firing control device of the static switches has been connected, which is activated in terms of a variable delay, according to the firing angle profile with regard to the synchronism signals coming from the voltage transducers or the output signals of the zero crossing detector.

The control device has connected a double pulse generator for the firing of static switches, whose activation is in terms of the signals generated by the sequential and cyclic control device of the signals coming from the firing control device.

Between the firing control device and the double pulse firing generator, there is a proportional-integral-derivative regulator, whose activation is conditioned by a speed feedback, as long as the corresponding switch is connected, determining the comparison between the signal coming from the firing control device and the actual value obtained as of a speed transducer, preferably electromechanical, coupled to the motor.

The assembly also includes a loss detector of a main or feed phase of the motor and a short circuit failure detector of the static switches, establishing the discrimination of each failure by means of detection of non-conduction in one of the phases and the detection of the angle of the phase of the currents in the other two feed phases by means of voltage transducers.

The control method consists of effecting the simultaneous firing of two of the static switches, corresponding to two phases and being initially synchronized with a certain point of the corresponding line-to-line waveform voltage of the phases that are fired, repeating cyclically in the three phases, establishing the working rating in discontinuous conduction, which determines instants in which the current does not flow through any of the three phases.

The synchronization is coincident with the zero crossing of the currents in each one of the phases, determining the firing when the operating mode is of continuous conduction, a mode which is produced when the conduction angle of each one of the phases is identical or greater than 120 electric degrees per semiperiod of feed voltage.

The first double firing pulse is applied to two static switches with delay between 170 and 180 electric degrees with regard to zero crossing of the line-to-line waveform voltage between the phases to be fired.

The delay of the application of the successive firing pulses to the static switches in connection respectively with the zero crossings of the voltage wave composed of the two phases to be fired, is reduced to a value no greater than 140 and 150 electric degrees, in a time between 2 and 10 cycles of the feed line.

The motor can be fed with an initial voltage, when starting, less than 40 % of the voltage of the feed line.

The conduction angle of the static switches is increased rapidly to reach full conduction of 180 electric degrees per semiperiod, when the motor has accelerated up to a speed close to the nominal one.

During the stopping phase of the motor, the conduction angle of the static switches drops according to a non-linear, monotonous and decreasing time function.

For the purpose of conveniently illustrating what we have set forth up to now, as an integral part of the specification, three sheets of drawings are attached, wherein in a simplied and schematic manner a purely ilustrative, non-restrictive example of the practical and technical possibilities of the embodiment has been represented.

Figure 1 represents a block diagram of the apparatus.

Figure 2 shows the initial operating phase with discontinuous current, showing the initial firing cycles.

Figure 3 shows the progression sequence of the BETA angle of interruption time of the current of each phase.

Figure 4 shows graphically the evolution of the BETA angle and the voltage of the terminals of the motor in the course of time.

The apparatus that the three phase induction motor starting and stopping control method carries out, in accordance with the hereinabove described features, consist of the following functional blocks that characterise it:
- Solid state static switch group (1), being power semiconductors. Said static switches (1) are of the type that switch to the conduction state upon receiving a firing signal and remains in this state until the current that flows through it dies out. Thyristors and triacs are considered archetypes of this type of semiconductor. When the type mentioned in the first place is used, it is necessary to connect two elements in antiparallel in eachphase, to allow the flow of current in both directions.
- Analogic-digital voltage transducers (2) with galvanic insultation in input and output signals. These devices provide a digital output (with evels O or 1), depending on the voltage applied to its input being lower or higher than a threshold voltage defined by the transducer circuit itself. These elements make it possible to recognize the conduction or blocking state of the static switches (1.)
- Zero crossing detector circuit (4.) The output signal of this circuit varies from O to 1 and vice versa at each zero crossing of the voltage wave explored at its input. Said signal is taken as a standard for the synchronization of the firing of the static switches (1) during the operating mode with discontinuous current.
- Electromotive force detector (5) of motor (3) with level comparator. This element provides an output signal when the electromotive force of the motor, measured as line-to-neutral voltage between the input terminal of one phase and the neutral one during the period of non-conduction of current in the cited phase, exceeds the internal level. This signal is used as an indication of the motor (3) speed to detect when a speed close to the nominal one has been reached and its presence modifies the growth profile of the conduction angle, as has been explained above.
- Current transducer elements (7) to read the motor (3) current and signal level converter (8.) When the current that flows through the motor (3) exceeds a preset value, the output signal of the level converter (8) is used to stop the growth of the conduction angle value of the static switches (1.)
- Sequential and cyclic control device (6.) It is the discriminating element of the phase sequence and of the feed voltage frequency. It receives signals indicating the state of the static switches (1) provided by the voltage transducer (2) and the zero crossing signals of the voltage generated in detector (4) and processes them to obtain the synchronization signals of the firing pulses that are applied to the static switches (1.) These synchronization signals constitute the origin of times regarding which the firing signals that are applied simultaneously to two phases cyclically are produced.
- Firing control device (9), which constitutes a profile generator in the voltage ramp applied to the motor (3.) This element generates two signals, depending on whether it operates with an open or closed loop. In the case of an open loop, it generates a timing that, applied to the synchronism signals coming from the sequential and cyclical control device (6), determines the conduction angle of the static switches (1.) As it has already been indicated in the description of the control method, upon giving a running order, the conduction angle increases rapidly from a minimum value, which corresponds to a delayed firing angle between 170 and 180 electric degrees with regard to the zero crossing of the line-to-line waveform voltage between the phases to be struck, up to an adjustable value in terms of the desired starting torque; afterwards it increases gradually in accordance with the acceleration time desired for the motor (3) and when the electromotive force detector (5) of the motor indicates that the speed thereof is close to the nominal one, it increases again rapidly until the maximum value possible is reached, around 180 electric degrees per semiperiod of feed line.

In the case of closed loop of velocity, this firing control device (9) produces a growing output signal with the time that corresponds to the theoretical time velocity curve profile.
- Proportional-integral-derivative regulatur (11.) It is only activated in the case of speed feed-back. It compares the reference speed signal coming from the control device (9) with the actual value of the speed obtained by means of the electromechanical velocity transducer (12) coupled to the motor (13), which commonly is a tachometric generator or pulse generator. The error signal obtained is amplified with a proportional-integral-derivative characteristic and said amplified signal governs the firing angle and therefore the conduction of the static switches (1.)
- Double pulse striking generator (10.) It receives synchronization signals and of the firing angle value and generates pairs of firing pulses that are applied cyclically and simultaneously to each two static switches (1) to ensure the flow of current in the two phases that are fired.

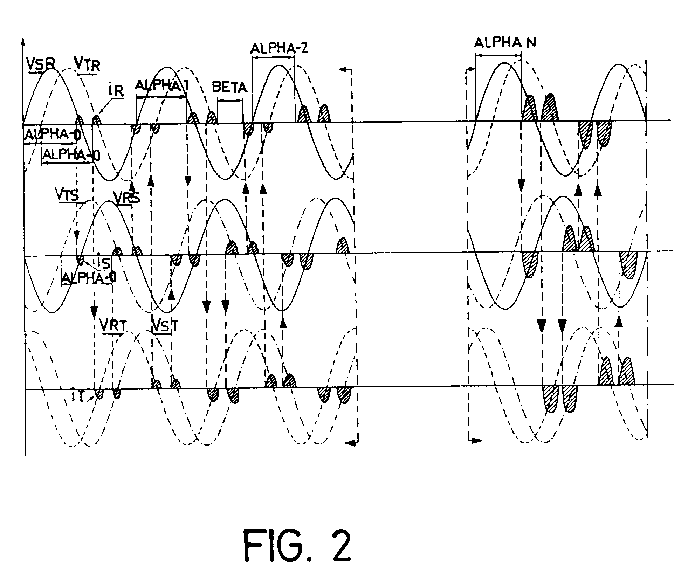

In the initial operating phase with discontinuous current as is seen in Figure 2, there are times during which there is no conduction in any of the three feed phases. Upon three abscissa axes the currents of each one of the phases i_{R}, i_{S}, i_{T} have been represented respectively. Each current has been listed with the line-to-line voltage signals corresponding to the phases that are fired simultaneously. The first firing is produced simultaneously in phases R and S and takes place with delay in connection with the zero crossing of the voltage composed between said phases V_{RS}, which corresponds to an angle ALPHA O of 170-180^{º}. The second firing is produced simultaneously in phases R and T and is done with a delay with regard to the zero crossing of the voltage composed between said phases V_{TR} that correspond to the same angle ALPHA O mentioned above. The third firing is done simultaneously between phases S and T, also with a delay in connection with the voltage composed between said phases V_{TS} which correspond to the same ALPHA O angle cited above. As of this instant the described firing sequence is repeated cyclically, the ALPHA angle decreasing each complete voltage cycle in accordance with the timing provided by the firing control device (9) or ramp profile generator until a value selectable in the apparatus is reached which is lower or equal to an ANPHA N between 140 and 150º in a few composed voltage cycles V_{TR}, said number of cycles normally being between two and ten.

As of this moment, ALPHA continues to decrease, in accordance with the successive timing provided by the profile generator, in other words, by the firing control device (9), after each line cycle, said decrease being a function of the desired acceleration time.

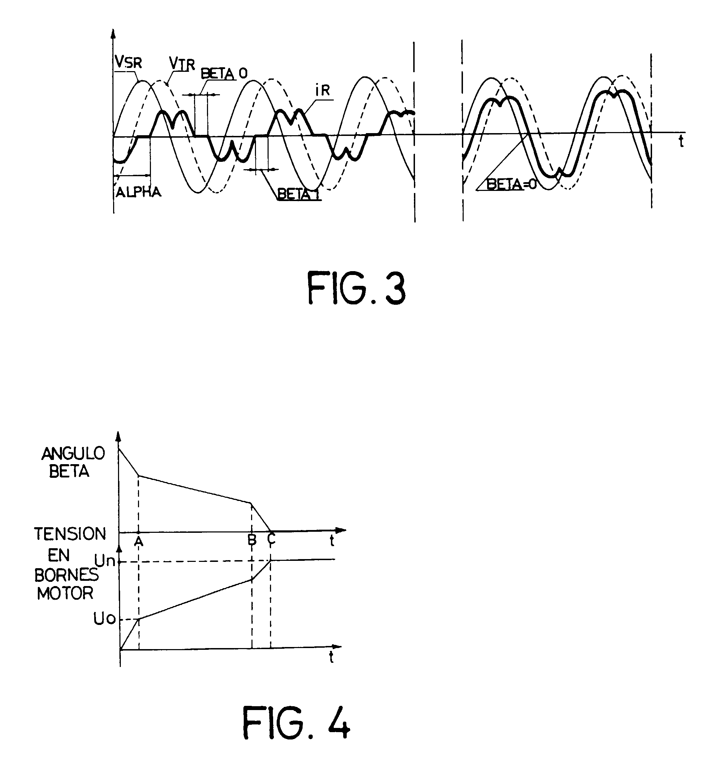

By means of the voltage transducers (2), the control system simultaneously determines the current interruption time in each phase, indicated as BETA angle in figures 2 and 3. The theoretical analysis demonstrates that when said angle is smaller than 60º, the functioning of the system is established in a continuous conduction rate, in other words, in each instant there are at least two phases conducting. This rate being reached, it is advantageous to use as synchronization signals the zero crossings of the current in each phase, instead of the zero crossings of the voltages, since this way it is not necessary to take into account the power factor of the motor in order to determine the minimum firing angle, which would be necessary if the synchronization by zero crossing of the voltage were maintained. The sequential and cyclic control device (6) automatically changes the synchronization signal when the BETA angle is smaller than 60º (BETA O in Figure 3), and as of this point, the ramp profile generator formed by the striking control device (3) decreases the BETA angle after each complete cycle of the line voltage, until full conduction of the three phases is attained, which takes place when BETA is zero.

One of the improvements provided by the present invention consists of decreasing the BETA non-conduction angle rapidly up to a null value when the electromotive force detector (5) detects that said electromotive force is close to that which corresponds to the nominal speed of motor (3) applying a signal to the firing control device (9), whereby the voltage applied to the motor (3) rapidly increases the voltage value present in the feed line, in such a way that the motor (3) operates in permanent operating conditons immediately after having finished the acceleration time, which depends not only on the voltage applied to the windings thereof, but also on the load resistant torque value. In Figure 4 it is shown how, in accordance with the method object of this invention, the non-conduction angle and the terminal voltage of the motor evolve in time, following some profiles that basically correspond to three straight line segments.

Another very important aspect of the present invention refers to the protection of the motor (3) in the case of failure of the apparatus as well as in the case of failure in the feed line or connection between the feed line and apparatus or between the apparatus and motor. The two main causes that require the protection of the motor are failure by internal short-circuit in any of the controlled switching elements or loss of one of the feed phases of the motor. In both cases it is possible to protect the motor and discriminate the cause for the purpose of diagnosing the type of breakdown. In both circumstances the voltage transducers (2) that control the conduction or blocking state of the static switching elements (1) provide a signal indicating the failure, since in both cases there is never any voltage difference between the input and output of the static switch (1) corresponding to the affected phase. The discrimination between both types of breakdown is attained by determining by means of the sequential and cyclic control device (6), which receives the signals of the currents of the three phases, if the currents in the two unaffected phases are in opposition to the phase, in which case it means that there is no current in the affected phase and therefore the breakdown consists of a connection loss of the affected phase, or if they are not in opposition of the phase this implies a passing of current by the three phases and consequently the breakdown in the affected phase, consisting of an internal short-circuit of the static switching element (1) connected in series in said phase between the feed line and the motor (3.) In both cases. the detection of phase loss or short-circuit of the static switch (1) can cause the output of an alarm signal that cuts off the feed of the motor (3) instantaneously or preferably timed in the case that the failure is detected during a time greater than the pre-set value.

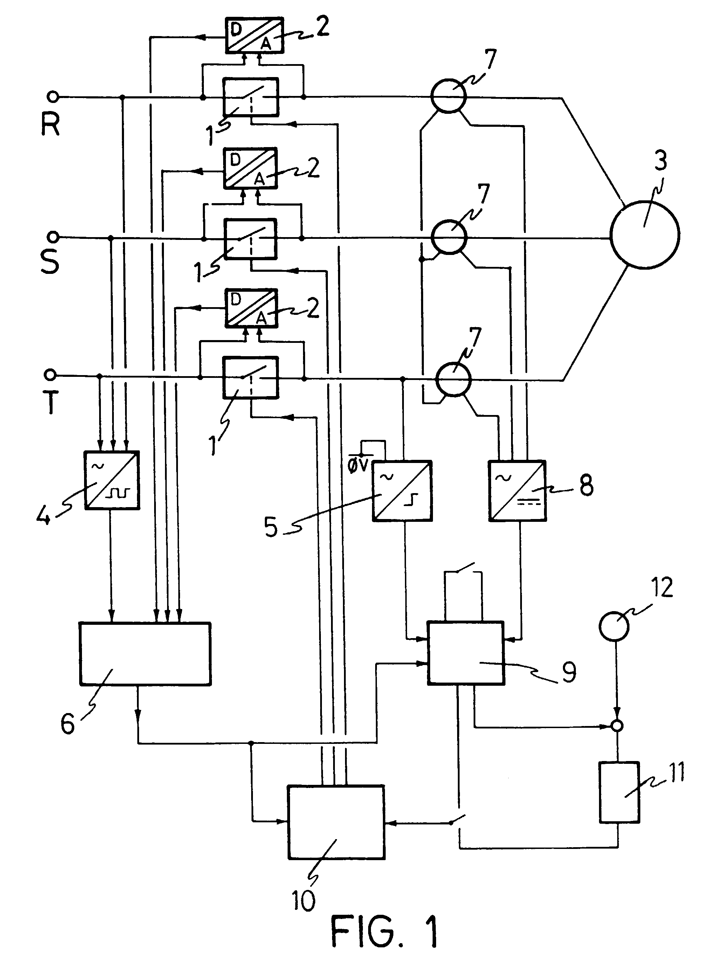

In the apparatus object of this invention, diverse funcitons indicated in the description of the apparatus itself and indicated as functional blocks in Figure 1 can be preferably implemented by means of the use of a microprocessor, a very suitable technique from points of view of reduction of the number of components, ease of doing the necessary calculations, increase the reliability of the system and reduction of the cost of the apparatus.

## Claims

1. Apparatus for controlled starting and stopping of a three-phase induction motor (3), comprising
- three AC current supply lines (R,S,T) each coupled to a separate winding of the motor (3);
- a number of static switches (1), one static switch (1) being connected in series with each of said supply lines (R,S,T) and being of the type that switch to the conduction state upon receiving a firing signal and remain in this state until the AC current flowing therethrough is cut off;
- a number of galvanically insulated analog-to-digital voltage transducers (2), with analog input and with digital output with two levels, high and low, each of said analog-to-digital transducers being connected between the input and output terminals of said static switches (1);
- a supply voltage zero-crossing detector (4) connected in at least one of said supply lines (R,S,T);
- an electromotive force detector (5) connected to at least one of the supply lines (R,S,T) and arranged to detect the line-to-neutral voltage during the periods when said supply line is not conducting current;
characterized in that
the apparatus further comprises
- means for giving simultaneous firing orders to the static switches (1) corresponding to two of the three supply lines (R,S,T), said means being arranged to apply cyclically this double firing order to all of the static switches (1) connected to the three supply lines (R,S,T), in accordance with the voltage sequence of the supply lines or sequence of the currents that flow through the motor phases, thereby permitting discontinuous current operation, wherein there are instants during which no current flows through any of the motor phases or the feed line.

2. An apparatus according to claim 1, wherein the means for giving simultaneous firing orders include a sequential and cyclic control device (6) receiving signals from said analog-to-digital transducers (2) and from said zero-crossing detector (4) and processing said signals, said sequential and cyclic control device (6) having an output connected to the input of a double pulse generator (10), said double pulse generator (10) being arranged to receive synchronization signals on said input, said double pulse generator (10) having outputs connected to the the static switches (1) for sending the respective firing signals to said static switches (1), said double pulse generator (10) being arranged to generate pairs of firing pulses that are applied cyclically and simultaneously to the static switches (1) corresponding to two of the three supply lines (R,S,T).

3. An apparatus according to claim 2, wherein the means for giving simultaneous firing orders further include a firing control device (9) which constitutes a voltage ramp profile generator and which has an output connected to an input on the double pulse generator (10), such that the double pulse generator is controlled by the sequential and cyclic control device (6) and by the firing control device (9), in order to provide correct synchronization and firing angles.

4. An apparatus according to claim 3, further including
- at least one current transducer (7) coupled to at least one of the supply lines (R,S,T) and arranged to detect the current flowing through said supply line (7), said current transducer having an output connected to a signal level converter (8);
whereby
- the firing control device (9) is arranged to receive at its inputs signals from the electromotive force detector (5) and from the signal level converter (8).

5. An apparatus according to claim 4, further including
- a proportional-integral-derivative regulator (11) interconnectable between the firing control device (9) and the double firing pulse generator (10) in a speed feed-back mode;
- a speed transducer (12) providing a value of the actual motor (3) speed value;
the proportional-integral-derivative regulator (11) and the speed transducer (12) being disposed such that in the speed feed-back mode, the proportional-integral-derivative regulator (11) receives at an input the difference between a reference speed signal provided by the firing control device (9) and an actual speed value provided by the speed transducer (12), and the proportional-integral-derivatie regulator (11) has its output connected to the double pulse firing generator (10), in order to provide an acceleration curve of the motor that is independent of the load torque value.

6. Apparatus according to claim 5, wherein the speed transducer (12) is an electromechanical speed transducer (12).

7. Apparatus according to any of the preceding claims, further including a loss of supply phase detector for detecting a loss of a supply phase, and a short-circuit detector for detecting a short-circuit in one of the static switches (1), arranged such that the corresponding failure in one supply phase is detected by means of the current phase angles corresponding to the other two phases, said phase angles being detected out from the voltage transducers (2).

8. Method for operating an apparatus according to any of the preceding claims,
characterized by
- firing simultaneously two of said static switches (1) corresponding to two phases being initially synchronized with a determined point of the line-to-line voltage wave corresponding to the phases that are fired;
- repeating cyclically said double firing in the three phases in accordance with the voltage sequence of the supply lines or the sequence of the currents flowing through the motor phases;
thereby allowing a discontinuous operating mode wherein there are time periods during which no current flows through any of the three phases; feeding the motor with an initial voltage lower than 40% of the supply line voltage.

9. Method according to claim 8, wherein the first pair of static switches (1) are fired with a delay of 170-180 electric degrees with regard to the zero crossing of the line-to-line voltage between the corresponding supply lines (R,S,T).

10. Method according to any of claims 8 and 9, wherein the the delay of the firing pulses with respect to the zero crossing of the line-to-line voltage of the phases corresponding to the static switches (1) which are to be struck, is rapidly reduced to a value not exceeding 140-150 electric degrees, this reduction taking place in a time corresponding to 2-10 cycles of the supply line voltage.

11. Method according to any of claims 8-10, wherein the conduction angle of the static switches (1) is increased rapidly until reaching full conduction of 180 electric degrees per semiperiod, once the motor (3) has been accelerated up to a speed close to the nominal one.

12. Method according to any of claims 8-11, wherein the synchronization is initially based on the zero-crossing of the line-to-line voltage of the phases corresponding to the static switches (1) which are to be struck, and wherein the synchronization is changed to be based on the zero crossing of the currents in each one of the phases once the conduction angle of each one of the phases is equal to or greater than 120 electric degrees per semi-period of feed voltage.

13. Method according to any of claims 8-12, wherein during the stopping of the motor (3), the conduction angle of the static switches (1) is dropped according to a non-linear, monotonous and decreasing function of the time.

14. Method according to any of claims 8-13, wherein a failure in a supply phase is detected by means of detecting the currents in the phases, whereby, in the case of a failure in one phase, the currents in the two unaffected phases are detected and
- if said currents are in phase opposition, this is considered to imply a loss of the the affected phase;
whereas
- if said currents are not in phase opposition, this is considered to imply an internal short-circuit in the switching element in the affected phase.

## Patentansprüche

1. Vorrichtung zum gesteuerten Starten und Stoppen eines Dreiphaseninduktionsmotors (3), welche aufweist
- drei Wechselstromversorgungsleitungen (R, S, T), die jeweils an eine getrennte Wicklung des Motors (3) angeschlossen sind;
- eine Anzahl an statischen Schaltern (1), wobei ein statischer Schalter (1) in Reihe mit jeder der Versorgungsleitungen (R, S, T) geschaltet ist und von jenem Typ ist, der in den Leitungszustand nach Empfang eines Zündsignals umschaltet, und in diesem Zustand bleibt, bis der durch ihn fließende Wechselstrom abgeschaltet wird;
- eine Anzahl galvanisch isolierter Analog/Digital-Spannungswandler (2), mit analogem Eingang und mit digitalem Ausgang mit zwei Pegeln, hoch und niedrig, wobei jeder der Analog/Digitalwandler zwischen die Eingangs- und Ausgangsklemmen der statischen Schalter (1) geschaltet ist;
- einen Versorgungs-Nullspannungsdurchgangsdetektor (4), der zumindest in einer der Versorgungsleitungen (R, S, T) vorgesehen ist;
- einen Detektor (5) für die elektromotorische Kraft, der an zumindest eine der Versorgungsleitungen (R, S, T) angeschlossen ist, und so ausgebildet ist, daß er die Spannung zwischen Leitung und Neutralleiter in den Zeiträumen feststellt, wenn durch die Versorgungsleitung kein Strom fließt;
dadurch **gekennzeichnet**, daß die Vorrichtung weiterhin aufweist
- eine Vorrichtung zur Ausgabe gleichzeitiger Zündbefehle an die statischen Schalter (1) entsprechend zweien der drei Versorgungsleitungen (R, S, T), wobei die Vorrichtung dazu ausgebildet ist, zyklisch diesen Doppelzündbefehl an sämtliche statischen Schalter (1) anzulegen, die an die drei Versorgungsleitungen (R, S, T) angeschlossen sind, entsprechend der Spannungssequenz der Versorgungsleitungen oder der Sequenz der Ströme, die durch die Motorphasen fließen, wodurch ein unterbrochener Strombetrieb zugelassen wird, wobei Zeitpunkte vorhanden sind, in welchen kein Strom durch irgendeine der Motorphasen oder die Versorgungsleitung fließt.

2. Vorrichtung nach Anspruch 1,
bei welcher die Vorrichtung zur Ausgabe gleichzeitiger Zündbefehle eine sequentielle und zyklische Steuervorrichtung (6) aufweist, welche Signale von den Analog/Digitalwandlern (2) und von dem Nulldurchgangsdetektor (4) empfängt und diese Signale verarbeitet, wobei die sequentielle und zyklische Steuervorrichtung (6) einen Ausgang aufweist, der an den Eingang eines Doppelimpulsgenerators (10) angeschlossen ist, der Doppelimpulsgenerator (10) so ausgebildet ist, daß er Synchronisierungssignale an dem Eingang empfängt, der Doppelimpulsgenerator (10) Ausgänge aufweist, die na die statischen Schalter (1) angeschlossen sind, um die jeweiligen Zündsignale an die statischen Schalter (1) zu schicken, und der Doppelimpulsgenerator (10) so ausgebildet ist, daß er Paare an Zündimpulsen erzeugt, die zyklisch und gleichzeitig an die statischen Schalter (1) entsprechend zweien der drei Versorgungsleitungen (R, S, T) angelegt werden.

3. Vorrichtung nach Anspruch 2,
bei welcher die Vorrichtung zur Ausgabe gleichzeitiger Zündbefehle weiterhin eine Zündsteuervorrichtung (9) aufweist, welche einen Spannungsrampenprofilgenerator bildet, und bei welcher ein Ausgang an einen Eingang des Doppelimpulsgenerators (10) so angeschlossen ist, daß der Doppelimpulsgenerator durch die sequentielle und zyklische Steuervorrichtung (6) und durch die Zündsteuervorrichtung (9) gesteuert wird, um eine korrekte Synchronisierung und korrekte Zündwinkel zur Verfügung zu stellen.

4. Vorrichtung nach Anspruch 3, welche weiterhin aufweist
- zumindest einen Stromwandler (7), der an zumindest eine der Versorgungsleitungen (R, S, T) angeschlossen und so ausgebildet ist, daß er den durch die Versorgungsleitung (7) fließenden Strom feststellt, wobei der Stromwandler einen Ausgang aufweist, der an einen Signalpegelwandler (8) angeschlossen ist;
wodurch
- die Zündsteuervorrichtung (9) so ausgebildet ist, daß sie an ihren Eingängen Signalen von dem Detektor (5) für die elektromotorische Kraft und von dem Signalpegelwandler (8) empfängt.

5. Vorrichtung nach Anspruch 4, welche weiterhin aufweist
- einen Proportional-Integral-Differential-Regler (11), der in einer Drehzahlrückkopplungsbetriebsart zwischen die Zündsteuervorrichtung (9) und den Doppelzündungsimupulsgenerator (10) schaltbar ist;
- einen Drehzahlwandler (12), der einen Wert des aktuellen Drehzahlwerts des Motors (3) zur Verfügung stellt;
wobei der Proportional-Integral-Differential-Regler (11) und der Drehzahlwandler (12) so ausgebildet sind, daß in der Drehzahlrückkopplungsbetriebsart der Proportional-Integral-Differential-Regler (11) an einem Eingang die Differenz zwischen einem Bezugsdrehzahlsignal, welches von der Zündsteuervorrichtung (9) zur Verfügung gestellt wird, und einem aktuellen Drehzahlwert empfängt, der von dem Drehzahlwandler (12) zur Verfügung gestellt wird, und der Ausgang des Proportional-Integral-Differential-Reglers (11) an den Doppelimpulszündgenerator (10) angeschlossen ist, um eine Beschleunigungskurve des Motors zur Verfügung zu stellen, die von dem Lastdrehmomentwert unabhängig ist.

6. Vorrichtung nach Anspruch 5,
bei welcher der Drehzahlwandler (12) ein elektromechanischer Drehzahlwandler (12) ist.

7. Vorrichtung nach einem der voranstehenden Ansprüche, welche weiterhin einen Detektor für den Verlust der Versorgungsphase zur Feststellung eines Verlusts einer Versorgungsphase aufweist, und einen Kurzschlußdetektor zur Feststellung eines Kurzschlusses in einem der statischen Schalter (1), die so ausgebildet sind, daß der entsprechende Fehler in einer Versorgungsphase mit Hilfe der Stromphasenwinkel entsprechend den beiden anderen Phasen festgestellt wird, wobei die Phasenwinkel von den Spannungswandlern (2) festgestellt werden.

8. Verfahren zum Betrieb einer Vorrichtung nach einem der voranstehenden Ansprüche,
**gekennzeichnet** durch
- gleichzeitiges Zünden zweier der statischen Schalter (1) entsprechend zwei Phasen, die am Anfang synchronisiert sind mit einem festgelegten Punkt des Spannungssignals zwischen Leitung und Leitung entsprechend den Phasen, die gezündet werden;
- zyklische Wiederholung der Doppelzündung in den drei Phasen entsprechend der Spannungssequenz der Versorgungsleitungen oder der Sequenz der durch die Motorphasen fließenden Ströme;
wodurch eine diskontinuierliche Betriebsart zugelassen wird, in welcher Zeiträume vorhanden sind, in denen kein Strom durch eine der drei Phasen fließt; Versorgen des Motors mit einer Anfangsspannung, die niedriger ist als 40 % der Versorgungsleitungsspannung.

9. Verfahren nach Anspruch 8,
bei welchem das erste Paar der statischen Schalter (1) mit einer Verzögerung von 170 bis 180 elektrischen Grad in Bezug auf den Nulldurchgang der Spannung von Leitung zu Leitung zwischen den entsprechenden Versorgungsleitungen (R, S, T) gezündet werden.

10. Verfahren nach einem der Ansprüche 8 und 9,
bei welchem die Verzögerung der Zündimpulse in Bezug auf den Nulldurchgang der Spannung zwischen Leitung und Leitung der Phasen entsprechend den statischen Schaltern (1), die gezündet werden sollen, schnell auf einen Wert verringert wird, der nicht 140 bis 150 elektrische Grad überschreitet, wobei diese Verringerung in einem Zeitraum entsprechend 2 bis 10 Zyklen der Versorgungsleitungsspannung stattfindet.

11. Verfahren nach einem der Ansprüche 8 bis 10,
bei welchem der Leitungswinkel der statischen Schalter (1) schnell erhöht wird, bis die vollständige Leitung von 180 elektrischen Grad pro Halbperiode erreicht wird, sobald der Motor (3) bis zu einer Drehzahl nahe der Nominaldrehzahl beschleunigt wurde.

12. Verfahren nach einem der Ansprüche 8 bis 11,
bei welchem die Synchronisierung am Anfang auf dem Nulldurchgang der Spannung zwischen Leitung und Leitung der Phasen entsprechend den statischen Schaltern (1) beruht, die gezündet werden sollen, und wobei die Synchronisierung so geändert wird, daß sie auf dem Nulldurchgang der Ströme in jeder der Phasen beruht, sobald der Leitungswinkel jeder der Phasen größer oder gleich 120 elektrische Grade pro Halbperiode der Versorgungsspannung ist.

13. Verfahren nach einem der Ansprüche 8 bis 12,
bei welchem während des Stoppens des Motors (3) der Leitungswinkel der statischen Schalter (1) entsprechend einer nicht-linearen, monotonen und abnehmenden Funktion der Zeit absinkt.

14. Verfahren nach einem der Ansprüche 8 bis 13,
bei welchem ein Fehler in einer Versorgungsphase mit Hilfe der Erfassung der Ströme in den Phasen festgestellt wird, wobei im Falle eines Fehlers in einer Phase die Ströme in den beiden nicht betroffenen Phasen festgestellt werden, und
- wenn die Ströme entgegengesetzte Phase aufweisen, dies als Verlust der betroffenen Phase angesehen wird;
wogegen
- wenn die Ströme keine entgegengesetzte Phase aufweisen, dies als interner Kurzschluß in dem Schaltelement in der betroffenen Phase angesehen wird.

## Revendications

1. Appareil de régulation de démarrage et d'arrêt d'un moteur à induction triphasé (3) comprenant:
- trois lignes d'alimentation en courant alternatif (R, S, T) dont chacune est couplée à un enroulement séparé du moteur (3),
- un certain nombre de commutateurs statiques (1), un commutateur statique (1) étant connecté en série à chacune desdites lignes d'alimentation (R, S, T) et étant d'un type qui se commute sur l'état de conduction à la réception d'un signal d'allumage et reste dans cet état jusqu'à ce que le courant alternatif qui s'écoule à travers le commutateur soit coupé,
- un certain nombre de transducteurs de tension analogiques/numériques (2) à isolation galvanique, avec une entrée analogique et une sortie numérique à deux niveaux, un haut et un bas, chacun desdits transducteurs analogiques/numériques étant connecté entre les bornes d'entrée et de sortie desdits commutateurs statiques (1),
- un détecteur de passage par zéro de la tension d'alimentation (4) connecté dans au moins l'une desdites lignes d'alimentation (R, S, T),
- un détecteur de force électromotrice (1) connecté au moins à l'une des lignes d'alimentation (R, S, T) et agencé pour détecter la tension entre la ligne et le fil neutre pendant les périodes où ladite ligne d'alimentation ne conduit pas de courant,
caractérisé en ce que
l'appareil comprend par ailleurs :
- des moyens pour donner des ordres d'allumage simultanés aux commutateurs statiques (1) correspondant à deux des trois lignes d'alimentation (R, S, T), lesdits moyens étant agencés pour appliquer de manière cyclique ce double ordre d'allumage à tous les commutateurs statiques (1) connectés aux trois lignes d'alimentation (R, S, T), en fonction de la séquence de tension des lignes d'alimentation ou de la séquence de courant qui s'écoule à travers les phases du moteur, ce qui permet un fonctionnement en courant discontinu, dans lequel il y a des moments où aucun courant ne s'écoule à travers l'une quelconque des phases du moteur ou de la ligne d'alimentation.

2. Appareil selon la revendication 1, dans lequel les moyens permettant de donner des ordres d'allumage simultanés comprennent un dispositif de commande séquentiel et cyclique (6) recevant des signaux desdits transducteurs analogiques/numériques (2) et dudit détecteur de passage par zéro (4) et pour traiter lesdits signaux, ledit dispositif de commande séquentiel et cyclique (6) ayant une sortie connectée à l'entrée d'un générateur de doubles impulsions (10), ledit générateur de doubles impulsions (10) étant agencé pour recevoir des signaux de synchronisation sur ladite entrée, ledit générateur de doubles impulsions (10) ayant des sorties connectées aux commutateurs statiques (1) pour envoyer les signaux d'allumage respectifs auxdits commutateurs statiques (1), ledit générateur de doubles impulsions (10) étant agencé pour générer des paires d'impulsions d'allumage qui sont appliquées de manière cyclique et simultanément aux commutateurs statiques (1) correspondant à deux des trois lignes d'alimentation (R, S, T).

3. Appareil selon la revendication 2, dans lequel les moyens pour donner des ordres d'allumage simultanés comprennent par ailleurs un dispositif de commande d'allumage (1) qui constitue un générateur de profil progressif de tension et qui a une sortie connectée à une entrée sur le générateur de doubles impulsions (10) de telle sorte que le générateur de doubles impulsions soit commandé par le dispositif de commande séquentiel et cyclique (6) et par le dispositif de commande d'allumage (9) pour délivrer des angles de synchronisation et d'allumage corrects.

4. Appareil selon la revendication 3, comprenant par ailleurs :
- au moins un transducteur de courant (7) couplé à au moins une des lignes d'alimentation (R, S, T) et agencé pour détecter le courant circulant à travers ladite ligne d'alimentation (7), ledit transducteur de courant ayant une sortie connectée à un convertisseur de niveaux de signaux (8),
de sorte que :
- le dispositif de commande d'allumage (9) soit agencé pour recevoir, à ses entrées, des signaux provenant du détecteur de force électromotrice (5) et du convertisseur de niveaux de signaux (8).

5. Appareil selon la revendication 4, comprenant par ailleurs :
- un régulateur proportionnel intégral-dérivé (11) interconnectable entre le dispositif de commande d'allumage (9) et le générateur de doubles impulsions d'allumage (10) en mode de réaction de vitesse,
- un transducteur de vitesse (12) délivrant une valeur de la vitesse réelle du moteur (3),
le régulateur proportionnel intégral-dérivé (11) et le transducteur de vitesse (12) étant disposés de telle sorte qu'en mode de réaction de vitesse, le régulateur proportionnel intégral-dérivé (11) reçoive, à une entrée, la différence entre un signal de vitesse de référence délivré par le dispositif de commande d'allumage (9) et une valeur de vitesse réelle délivrée par le transducteur de vitesse (12), et le régulateur proportionnel intégral-dérivé (11) a sa sortie connectée au générateur de doubles impulsions d'allumage (10) pour obtenir une courbe d'accélération de moteur qui soit indépendante de la valeur du couple de charge.

6. Appareil selon la revendication 5, dans lequel le transducteur de vitesse (12) est un transducteur de vitesse électromécanique (12).

7. Appareil selon l'une quelconque des revendications précédentes, comprenant par ailleurs un détecteur de perte de phase d'alimentation pour détecter une perte d'une phase d'alimentation, et un détecteur de court-circuit pour détecter un court-circuit dans l'un des commutateurs statiques (1), agencés de telle sorte que la défaillance correspondante dans une phase d'alimentation soit détectée au moyen des angles de phase du courant correspondant aux deux autres phases, lesdits angles de phase étant détectés par les transducteurs de tension (2).

8. Procédé permettant de faire fonctionner un appareil selon l'une quelconque des revendications précédentes,
caractérisé par les étapes suivantes :
on allume simultanément deux desdits commutateurs statiques (1) correspondant à deux phases initialement synchronisées avec un point déterminé de l'angle de tension ligne à ligne correspondant aux phases qui sont allumées,
on répète de manière cyclique ledit double allumage dans les trois phases selon la séquence de tension des lignes d'alimentation ou la séquence des courants s'écoulant à travers les phases du moteur, permettant de la sorte un mode de fonctionnement discontinu, dans lequel il y a des périodes de temps au cours desquelles aucun courant ne s'écoule à travers l'une quelconque des trois phases; on alimente le moteur avec un tension initiale inférieure à 40 % de la tension de la ligne d'alimentation.

9. Procédé selon la revendication 8, dans lequel les deux premiers commutateurs statiques (1) sont allumés avec un retard de 170 à 180 degrés électriques par rapport au passage par zéro de la tension ligne à ligne entre les lignes d'alimentation correspondantes (R, S, T).

10. Procédé selon l'une quelconque des revendications 8 et 9, dans lequel le retard des impulsions d'allumage par rapport au passage par zéro de la tension ligne à ligne des phases correspondant aux commutateurs statiques (1) qui doivent être amorcés, est rapidement réduit à une valeur ne dépassant pas 140 à 150 degrés électriques, cette réduction ayant lieu dans une période correspondant à 2 à 10 cycles de la tension de ligne d'alimentation.

11. Procédé selon l'une quelconque des revendications 8 à 10, dans lequel l'angle de conduction des commutateurs statiques (1) est augmenté rapidement jusqu'à atteindre une conduction complète de 180 degrés électriques par demi-période, unefois que le moteur (3) a été accéléré jusqu'à une vitesse proche de la vitesse théorique.

12. Procédé selon l'une quelconque des revendications 8 à 11, dans lequel la synchronisation est initialement basée sur le passage par zéro de la tension ligne à ligne des phases correspondant aux commutateurs statiques (1) qui doivent être amorcés, et dans lequel la synchronisation est modifiée pour être basée sur le passage par zéro des courants dans chacune des phases, une fois que l'angle de conduction de chacune des phases est égal ou supérieur à 120 degrés électriques par demi-période de la tension d'alimentation.

13. Procédé selon l'une quelconque des revendications 8 à 12, dans lequel, au cours de l'arrêt du moteur (3), l'angle de conduction des commutateurs statiques (1) est réduit selon une fonction non linéaire, monotone et décroissante du temps.

14. Procédé selon l'une quelconque des revendications 8 à 13, dans lequel une défaillance d'une phase d'alimentation est détectée en détectant les courants dans les phases de sorte que, dans le cas d'une défaillance dans une phase, les courants des deux phases non affectées soient détectés et que :
si lesdits courants sont en opposition de phase, on considère que cela implique une perte de la phase affectée,
tandis que
- si lesdits courants ne sont pas en opposition de phase, cela est considéré comme impliquant un court-circuit interne de l'élément de commutation de la phase affectée.
